# EUROPÄISCHE PATENTANMELDUNG

(11) **EP 1 185 084 A2**
(43) Veröffentlichungstag der Anmeldung: **06.03.2002**
(21) Anmeldenummer: 01120036.7
(22) Anmeldetag: 20.08.2001
(51) Int. Cl.: H04N 1/64

(54) **Bildkodierungsverfahren und Bildkodierer**

(30) Priorität: 22.08.2000 DE 10041037
(71) Anmelder: UbiCom Gesellschaft für Telekommunikation mbH, 16540 Hohen Neuendorf (DE)
(72) Erfinder: Pilz, Ulrich, 13465 Berlin (DE)
(74) Vertreter: Heinze, Ekkehard, Dipl.-Phys. Dr.

(57) **Zusammenfassung**

Bildkodierungsverfahren zur Umwandlung eines Bildes in eine Datenbitfolge unter Auflösung in eine Mehrzahl von einzeln numerierten oder mit Bildpunktkoordinaten versehenen Bildpunkten, denen jeweils ein Helligkeits- und/oder Farbwert aus einer Mehrzahl von vorbestimmten Helligkeits- und/oder Farbwerten entspricht, wobei jedem der im Bild auftretenden Helligkeits- und/oder Farbwerte die Nummern bzw. Bildpunktkoordinaten der diesen Helligkeits- und/oder Farbwert aufweisenden Bildpunkte zugeordnet werden.

## Beschreibung

Die Erfindung betrifft ein Bildkodierungsverfahren nach dem Oberbegriff des Anspruchs 1 sowie einen Bildkodierer zur Durchführung dieses Verfahrens.

Die digitale Bildverarbeitung (Digital Image Processing), heute in der Regel verkürzt als Bildverarbeitung bezeichnet, ist ein sich schnell entwickelndes technisches Gebiet mit vielfältigen und immer weiter ausgeweiteten Anwendungsmöglichkeiten. Das Einsatzspektrum erstreckt sich von der zerstörungsfreien Werkstoff- und Konstruktionsprüfung über die automatische Steuerung von Robotern und ganzen Industrieanlagen über die Astronomie, Elementarteilchenphysik, Kartografie und Meteorologie bis hin zu verschiedenartigsten biologischen und medizinischen Anwendungen.

Die Digitalisierung eines Bildes oder Bildkodierung kann auf verschiedene Arten erfolgen - so werden auf einem Träger vorliegende Fotos oder Zeichnungen zeilenweise eingescannt, während als (analoges) Videosignal vorliegende Bilder direkt auf elektronischem Wege durch Analog-Digital-Wandlung in Datenbitfolgen umgesetzt werden können. Im Grunde besteht die Digitalisierung aus zwei Schritten, nämlich der Zerlegung der Bildvorlage in kleine, als Bildpunkte oder Pixel bezeichnete Flächenstücke (Rasterung) und der Zuweisung eines Helligkeits- und/ oder Farbwertes zu jedem Bildpunkt (Quantisierung).

Anwenderseitig werden an die Bildverarbeitung bzw. -kodierung ständig höhere Anforderungen hinsichtlich der räumlichen Auflösung, d. h. der Anzahl der Bildpunkte pro Flächeneinheit, und der Anzahl der Quantisierungsstufen der Helligkeits- bzw. Farbwerte auf der einen Seite sowie hinsichtlich des zu verarbeitenden Umfanges an Bildmaterial und der Verarbeitungsgeschwindigkeit andererseits gestellt. Es geht also um die möglichst schnelle Verarbeitung sehr großer Bilddatenmengen, so daß seit längerem intensive Entwicklungen zu Möglichkeiten der Datenkomprimierung oder auch -reduktion laufen. Es ist auch bereits eine Fülle von Verfahren in den verschiedenen Anwendungsfeldern in praktischem Gebrauch, wobei bitmap-orientierte Verfahren von der Kodierung des Bildes als Wellenfunktion oder der Vektor-Kodierung zu unterscheiden sind.

Ziel all dieser Verfahren ist es, das zu kodierende Bild durch möglichst wenig abzuspeichernde oder zu übertragende Daten zu beschreiben. Bekannt ist es auch, zur Reduzierung des Bilddatenumfanges weniger wichtige Bilddetails nicht mit abzuspeichern bzw. zu übertragen, Bilddaten nahe beieinander liegender Bildpunkte zusammenzufassen, bildbeschreibende Wellenfunktionen um Wellenanteile mit geringem Informationsgehalt zu verkürzen etc.. Ziel dieser Verfahren zur Bilddatenkompression ist die Einsparung von Speicherplatz bzw. die Beschleunigung der Bilddatenübertragung.

Ausgangspunkt der wesentlichen bekannten Verfahren zur Bildbeschreibung ist eine sogenannte Bitmap, die durch Zerlegung des Bildes in eine XY-Matrix aus Bildpunkten und Zuordnung eines Speicherbereiches, in dem ein Helligkeitswert und gegebenenfalls ein Farbwert als digitale Werte abgespeichert werden, zu jedem Bildpunkt gewonnen wird. Hierbei wird aus einer vorgegebenen Folge diskreter Helligkeits- bzw. Farbwerte dem Bildpunkt derjenige zugewiesen, der mit dem tatsächlichen Farbwert am ehesten übereinstimmt.

Bei diesem Vorgehen gilt: Ein Bild ist eine feste Anzahl von Bildpunkten (Pixeln), von denen jedem ein Helligkeits- und/oder Farbwert zugewiesen ist. Die Anzahl der benutzten Bildpunkte einerseits und Helligkeits- und Farbstufen andererseits differiert sehr stark in Abhängigkeit von der speziellen Anwendung. Unabhängig von der konkreten Festlegung der entsprechenden Werte haben diese Verfahren im Hinblick auf die Komprimierbarkeit bzw. Reduzierbarkeit des Bilddatenumfanges prinzipielle Limitierungen.

Der Erfindung liegt daher die Aufgabe der Bereitstellung eines Bildkodierungsverfahrens mit wesentlich verbesserten Bilddatenkomprimierungs- bzw. -reduzierungsmöglichkeiten zugrunde. Weiterhin soll ein entsprechender, leistungsfähiger und schneller Bildkodierer angegeben werden.

Diese Aufgabe wird hinsichtlich ihres Verfahrensaspektes durch ein Bildkodierungsverfahren mit den Merkmalen des Anspruchs 1 und hinsichtlich ihres Vorrichtungsaspektes durch eine Vorrichtung mit den Merkmalen des Anspruchs 10 gelöst.

Das erfindungsgemäße Verfahren, welches kurz als DLC(Dynamic Luminance and Crominance Encoding/Decoding)-Verfahren bezeichnet werden kann, schließt die folgende grundlegende Verarbeitungsregel ein: Ein Bild ist eine feste - jedoch vom Bildinhalt abhängige - Anzahl von Farb- und Helligkeitswerten, denen die bei der Rasterung erhaltenen Bildpunkte zugewiesen werden.

Um ein Bild nach diesem Verfahren zu kodieren, wird - ausgehend von eingeführten Techniken - insbesondere von einer Bitmap-Datei bereits digitalisierter Bilddaten ausgegangen. Im Verlaufe der Verfahrensdurchführung wird nun zunächst analysiert, welche Helligkeits- und Farbwerte überhaupt in dem Bild vorkommen. Nicht auftretende Farb- und Helligkeitswerte werden aus der verarbeitungsrelevanten Farb- und Helligkeitsskala eliminiert, da sie zur Bildbeschreibung nicht benötigt werden. Allein hierdurch läßt sich der Umfang der das Verfahrensergebnis bildenden Datenbitfolge bzw. "DLC-Datei" (in Abhängigkeit vom Bildinhalt) unter Umständen bereits erheblich reduzieren, ohne daß ein Informationsverlust aufträte. Den für die Bildbeschreibung erforderlichen Farb- bzw. Helligkeitswerten werden anschließend die Bildpunktkoordinaten bzw. -nummern zugewiesen, die diejenigen Bildpunkte definieren, in denen der jeweilige Farb- bzw. Helligkeitswert vorkommt.

In der am weitesten verbreiteten Ausführung herkömmlicher Bildverarbeitungsverfahren werden den Bildpunkten Bildpunktkoordinaten als Wertpaare aus kartesischen Koordinaten (X- und Y-Werte) zugewiesen. Entsprechend sind die Bildpunkte in der verfahrensgemäß erzeugten Datenbitfolge als Wertepaare angegeben, während die Helligkeits- und/oder Farbwerte, denen die Bildpunkte zugeordnet sind, bevorzugt als einzelne Zahlenwerte kodiert sind. In einer anderen - in der Praxis sicherlich weniger bedeutsamen - Ausführung werden den Bildpunkten Polarkoordinaten (r- und ϕ-Werte) zugewiesen - und auch hier sind die Helligkeits- und Farbwerte bevorzugt als einzelne Zahlenwerte kodiert.

Bevorzugt werden die den auftretenden Helligkeits- und Farbwerten zugeordneten Bildpunkte in einer vorbestimmten Ordnung der Helligkeits- und Farbwerte in der Datenbitfolge verschlüsselt, wobei in einer zweckmäßigen Ausführung allen einem bestimmten Helligkeits- und Farbwert zugeordneten Bildpunkten jeweils ein den Abstand zum vorhergehenden Helligkeits- und Farbwert kennzeichnender Wert vorangestellt wird. Dieses Vorgehen ergibt besondere Vorteile bei hinsichtlich der Helligkeits- bzw. Farbskala ausgeprägt "lückenhaften" Bildern. Anstelle der erwähnten Abstandswerte können aber auch direkt die Helligkeits- bzw. Farb-Absolutwerte in der Datenbitfolge verschlüsselt sein, denen jeweils die zugehörigen Bildpunktnummern oder -koordinaten (Wertepaare) nachgestellt sind.

Als vereinfachtes Beispiel hierfür wird nachfolgend die Bilddatenkodierung für ein Bild mit 640 x 480 Bildpunkten und 128 Farbwerten skizzenhaft beschrieben. Es versteht sich, daß für eine größere Anzahl von Bildpunkten und einen feiner abgestuften Farbraum sowie die (zusätzliche oder alleinige) Kodierung von Helligkeitswerten analog vorgegangen werden kann.

Für das Bild gälte die folgende Zuordnung ausgewählter Farbwerte und Bildpunkte:

| Farbwert | Pixel (X/Y) |
|---|---|
| 1 | 88/78 78/88 78/89 |
| 2 | |
| 3 | |
| 4 | |
| 5 | 55/55 |
| ... | |
| 22 | 27/56 27/57 66/89 |
| 23 | 17/88 18/78 |
| 128 | 67/78 67/90 123/89 126/67 200/56 |

Als ersten Schritt der Datenkompression verzichtet man auf die Speicherung bzw. Übertragung von Farbwerten, denen keine Bildpunkte zugewiesen sind. Damit sieht die DLC-Datei wie folgt aus:

| | |
|---|---|
| 1 | 88/78 78/88 78/89 |
| 5 | 55/55 |
| ... | |
| 22 | 27/56 27/57 66/89 |
| 23 | 17/88 18/78 |
| 128 | 67/78 67/90 123/89 126/67 200/56 |

Als nächstes wird gemäß einem im Bildkodierer (Encoder) wie auch im Decoder implementierten Algorithmus eine Zahlenfolge generiert, bei der mit einem Schrägstrich voneinander abgetrennte Zahlen die X- und Y-Koordinate eines Bildpunktes bezeichnen, während einzelne Zahlen einen Abstand zu vorherigen Farbwerten ("Sprung im Farbwert") bezeichnen. Es ergibt sich die Zahlenfolge: 88/78 78/88 78/89 4 55/55 17 27/56 27/57 66/89 1 17/88 17/78 105 67/78 67/90 123/89 126/67 200/56.

Eine zusätzliche Möglichkeit zur Datenkompression ergibt sich, wenn innerhalb des Bildes eine bestimmte Anzahl von Teilbilder nach einem vorbestimmten Algorithmus definiert wird, beispielsweise zwei Teilbilder (links/rechts) oder vier Teilbilder (links oben/rechts oben/links unten/rechts unten), und in der Bildkodierer- sowie Decoder-Software die Vereinbarung implementiert ist, daß innerhalb der Zahlenfolge (Datenbitfolge) die Beschreibung eines nächsten Teilbildes beginnt, wenn nach ansteigenden X- bzw. Y-Koordinaten wieder niedrigere Werte auftreten.

Auch dies sei an einem Beispiel verdeutlicht:

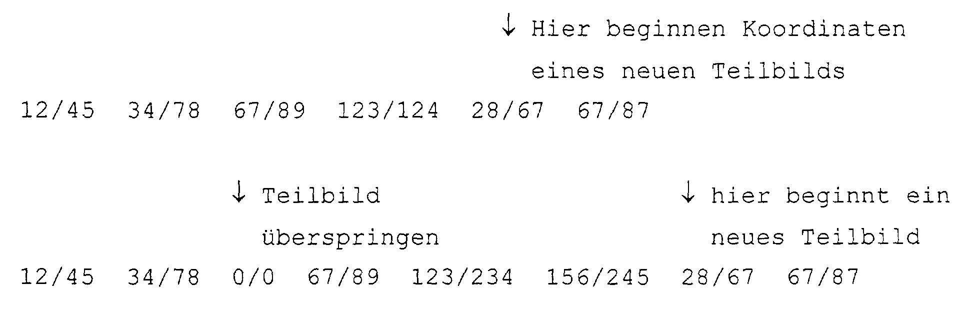

Eine wesentliche Möglichkeit zur Datenreduktion ergibt sich dadurch, daß Helligkeits- und/oder Farbwerte, denen eine einen bestimmten Schwellwert unterschreitende Anzahl von Bildpunkten zugeordnet ist, in der DLC-Datei nicht kodiert werden. Im einfachsten Fall tauchen die entsprechenden Bildpunkte in der reduzierten Datenbitfolge überhaupt nicht mehr auf. Verfeinert wird dieses Vorgehen dadurch, daß diejenigen Bildpunkte, deren Helligkeits- und/oder Farbwerte nicht kodiert werden, jeweils dem nächst benachbarten Helligkeits- und/oder Farbwert zugeordnet werden. Auch die erstgenannte, bei der Kodierung einfachere Möglichkeit läßt sich verfeinern, und zwar, in dem auf der Decoderseite denjenigen Bildpunkten, für die kein Helligkeits-bzw. Farbwert geliefert wurde, ein aus Informationen über die umgebenden Bildpunkte errechneter Wert zugewiesen wird.

Hierbei ist es zur Begrenzung der Folgen von Informationsverlusten möglich, geschützte Bildbereiche zu definieren. Stammt ein Bildpunkt aus diesem speziell definierten Bereich, werden implementierte Datenreduktionsverfahren hierfür gar nicht oder nach einem abgeschwächten Modus angewandt. Die diesbezügliche Information muß nur im Bildkodierer vorliegen und dem Decoder nicht mitgeteilt werden, so daß das Vorgehen keine zusätzliche Übertragungskapazität benötigt.

Die oben erwähnten Verfahrensschritte und -aspekte haben in der Ausführung eines Bildkodierers jeweils ein Vorrichtungs-Äquivalent in Hardware- oder Software-Realisierung. Der erfindungsgemäße Bildkodierer umfaßt insbesondere eine Bildpunkt-Zuordnungseinrichtung zur Realisierung der erwähnten Zuordnung von Nummern bzw. Koordinaten von Bildpunkten zu den einzelnen auftretenden Helligkeits- bzw. Farbwerten. Weiterhin umfaßt er insbesondere eine Helligkeits-/Farbwert-Erfassungseinrichtung zur Untersuchung des Bildes - oder einer primären Bitmap - auf das Auftreten der einzelnen Helligkeits- und/oder Farbwerte aus einer vorbestimmten Mehrzahl solcher Werte.

Schließlich hat der Bildkodierer insbesondere einen digitalen Eingang für eine primäre Datenbitfolge (Bitmap) und einen digitalen Ausgang für die sekundäre - komprimierte und gegebenenfalls reduzierte - Datenbitfolge (DLC-Datei).

In einer die oben erwähnte Datenreduktion durch Nicht-Kodierung selten vorkommender Helligkeits- bzw. Farbwerte ermöglichenden Ausführung hat der Bildkodierer einen Helligkeits-/Farb-Schwellwertdiskriminator und eine mit diesem sowie der Helligkeits-/Farb-Erfassungseinrichtung verbundene Zählereinrichtung zur Feststellung der Anzahl von einem bestimmten Helligkeits-bzw. Farbwert zugeordneten Bildpunkten und zur Diskriminierung dieser Bildpunktanzahl an einem vorbestimmten (programmierten) Schwellwert.

Mit diesen Komponenten ist in einer weiteren speziellen Ausführung eine Nachbarwert-Zuweisungseinrichtung verbunden, die denjenigen Bildpunkten den nächst benachbarten Helligkeits- bzw. Farbwert der primären Werteskala zuweist, deren ursprünglicher Helligkeits- bzw. Farbwert aufgrund der geringen Anzahl zugeordneter Bildpunkte nicht kodiert wird.

In einer weiteren speziellen Ausführung umfaßt der Bildkodierer eine Bildaufteilungseinrichtung, die im eingangs erwähnten Schritt der Rasterung des Bildes wirksam wird und entweder einen Bildbereich mit hoher Priorität (oder auch mehrere solche Bildbereiche) definiert und/oder das Bild in Teilbilder mit jeweils gesonderter Bildpunktnummerierung bzw. -koordinatenzuweisung unterteilt.

Die Ausführung der Erfindung ist nicht auf diese Aspekte und die oben erwähnten vereinfachten Beispiele beschränkt, sondern im Rahmen der anhängenden Ansprüche in einer Vielzahl von Abwandlungen ausführbar, die im Rahmen fachgemäßen Handelns liegen.

Auch die Anwendung zahlreicher bereits bekannter Verfahren zur Datenreduktion und Datenkompression ist mit dem DLC-Verfahren sinnvoll im Sinne einer möglichst großen Verringerung der Datenmenge möglich. So bietet z. B. die bekannte Methode der Lauflängencodierung eine Möglichkeit, die Anzahl zu übertragender oder zu speichernder Bits weiter zu verringern. Gut geeignet zur Kombination mit dem DLC-Verfahren ist die Methode der Bildung von Bildclustern, bei denen die Übertragung von benachbarten Pixeln mit gleicher Farb- oder Helligkeitsinformation durch Bildung eines Clusters als verkürzt zu beschreibende Zusammenfassung dieser Pixel erfolgt.

## Patentansprüche

1. Bildkodierungsverfahren zur Umwandlung eines Bildes in eine Datenbitfolge unter Auflösung in eine Mehrzahl von einzeln numerierten oder mit Bildpunktkoordinaten versehenen Bildpunkten, denen jeweils ein Helligkeits- und/oder Farbwert aus einer Mehrzahl von vorbestimmten Helligkeits- und/oder Farbwerten entspricht,
**dadurch gekennzeichnet, daß**
jedem der im Bild auftretenden Helligkeits- und/oder Farbwerte die Nummern bzw. Bildpunktkoordinaten der diesen Helligkeits- und/oder Farbwert aufweisenden Bildpunkte zugeordnet werden.

2. Bildkodierungsverfahren nach Anspruch 1,
**dadurch gekennzeichnet, daß**
in einem ersten Schritt das Bild daraufhin untersucht wird, welche der vorbestimmten Mehrzahl von Helligkeits- und/oder Farbwerten in dem Bild auftreten, und
in einem zweiten Schritt jedem der aufgefundenen Helligkeits- und/oder Farbwerte die Nummern bzw. Bildpunktkoordinaten der diesen Helligkeits- und/oder Farbwert aufweisenden Bildpunkte zugeordnet werden

3. Bildkodierungsverfahren nach Anspruch 1,
**gekennzeichnet durch**
die Ausführung als Bearbeitung einer primären Datenbitfolge zur Gewinnung einer sekundären, insbesondere komprimierten oder reduzierten, Datenbitfolge, wobei Helligkeits- und/oder Farbwerte, denen kein Bildpunkt zugeordnet ist, in der sekundären Datenbitfolge nicht kodiert werden.

4. Bildkodierungsverfahren nach Anspruch 3,
**dadurch gekennzeichnet, daß**
den Bildpunkten Bildpunktkoordinaten als Wertepaare aus kartesischen Koordinaten oder Polarkoordinaten zugewiesen sind und die Bildpunktkoordinaten in der sekundären Datenbitfolge als Wertepaare angegeben sind, während die Helligkeits- und/oder Farbwerte, denen die Bildpunkte zugeordnet sind, als einzelne Zahlenwerte kodiert werden.

5. Bildkodierungsverfahren nach einem der vorangehenden Ansprüche,
**dadurch gekennzeichnet, daß**
die den auftretenden Helligkeits- und/oder Farbwerten zugeordneten Bildpunkte in einer vorbestimmten Ordnung der Helligkeits- und/oder Farbwerte angegeben werden, wobei vor den einem bestimmten Helligkeits- und/oder Farbwert zugeordneten Bildpunkten jeweils ein den Abstand zum vorhergehenden Helligkeits- und/oder Farbwert kennzeichnender Wert vorangestellt wird.

6. Bildkodierungsverfahren nach einem der vorangehenden Ansprüche,
**dadurch gekennzeichnet, daß**
zur Datenreduktion Helligkeits- und/oder Farbwerte, denen eine einen bestimmten Schwellwert unterschreitende Anzahl von Bildpunkten zugeordnet ist, nicht kodiert werden.

7. Bildkodierungsverfahren nach Anspruch 6,
**dadurch gekennzeichnet, daß**
diejenigen Bildpunkte, deren Helligkeits- und/oder Farbwerte nicht kodiert werden, dem nächst benachbarten Helligkeits- und/oder Farbwert zugeordnet werden.

8. Bildkodierungsverfahren nach Anspruch 6 oder 7,
**dadurch gekennzeichnet, daß**
besonders relevante Teile eines Bildes vorbestimmt werden, in denen die Nicht-Kodierung von Helligkeits- und/oder Farbwerten, denen eine einen bestimmten Schwellwert unterschreitende Anzahl von Bildpunkten zugeordnet ist, aufgehoben wird.

9. Bildkodierungsverfahren nach einem der vorangehenden Ansprüche,
**dadurch gekennzeichnet, daß**
das Bild in einer vorbestimmten Ordnung in Teilbilder unterteilt wird, in denen die Bildpunkte jeweils separat numeriert oder mit Bildpunktkoordinaten versehen sind.

10. Bildkodierer zur Durchführung des Bildkodierungsverfahrens nach einem der vorangehenden Ansprüche,
**gekennzeichnet durch**
eine Bildpunkt-Zuordnungseinrichtung zur Zuordnung der einen bestimmten Helligkeits- und/oder Farbwert aufweisenden Bildpunkte zu dem entsprechenden Helligkeits- und/oder Farbwert.

11. Bildkodierer nach Anspruch 10,
**gekennzeichnet durch**
eine mit einem Eingang der Bildpunkt-Zuordnungseinrichtung verbundene Helligkeits-/Farbwert-Erfassungseinrichtung zur, insbesondere abtastenden, Untersuchung des Bildes auf die auftretenden Helligkeits- und/oder Farbwerte.

12. Bildkodierer nach Anspruch 10 oder 11,
**gekennzeichnet durch**
einen digitalen Eingang zum Empfang einer primären Datenbitfolge und einen digitalen Ausgang zur Ausgabe einer sekundären, insbesondere komprimierten oder reduzierten, Datenbitfolge.

13. Bildkodierer nach einem der Ansprüche 10 bis 12,
**gekennzeichnet durch**
einen Helligkeits-/Farb-Schwellwertdiskriminator und eine mit dem Ausgang der Bildpunkt-Zuordnungseinrichtung verbundene Zählereinrichtung zum Zählen der den einzelnen auftretenden Helligkeits- und/oder Farbwerten zugeordneten Bildpunkte, welche mit einem Eingang des Helligkeits-/Farb-Schwellwertdiskriminators verbunden ist,
wobei der Helligkeits-/Farb-Schwellwertdiskriminator und die Zählereinrichtung derart zusammenwirken, daß Helligkeits- und/oder Farbwerte, denen eine einen voreingestellten Schwellwert unterschreitende Anzahl von Bildpunkten zugeordnet ist, nicht kodiert und ausgegeben werden.

14. Bildkodierer nach Anspruch 13,
**gekennzeichnet durch**
eine mit dem Helligkeits-/Farb-Schwellwertdiskriminator verbundene Nachbarwert-Zuweisungseinrichtung zur Zuordnung derjenigen Bildpunkte, deren Helligkeits- und/oder Farbwerte wegen Unterschreitung des Schwellwertes nicht kodiert werden, zum nächst benachbarten Helligkeits- und/ oder Farbwert.

15. Bildkodierer nach einem der Ansprüche 10 bis 14,
**gekennzeichnet durch**
eine Bildaufteilungseinrichtung zur Festlegung abgegrenzter, besonders relevanter Teile eines Bildes und/oder zur Unterteilung des Bildes in Teilbilder, in denen die Bildpunkte jeweils separat numeriert oder mit Bildpunktkoordinaten versehen werden, in einer vorbestimmten Ordnung.
